# EUROPEAN PATENT APPLICATION

(11) **EP 1 653 753 A1**
(43) Date of publication of application: **03.05.2006**
(21) Application number: 05021805.6
(22) Date of filing: 06.10.2005
(51) Int. Cl.: H04Q 7/32, G06Q 20/00

(54) **Method for managing personal identification information of a subscriber identity module card in a mobile communication terminal**

(30) Priority: 06.10.2004 KR 2004079483
(71) Applicant: Samsung Electronics Co., Ltd., Suwon-si, Gyeonggi-Do (KR)
(72) Inventor: Park, Hong-Pyo, Yeongtong-gu, Suwon-si, Gyeonggi-do (KR)
(74) Representative: Grünecker, Kinkeldey, Stockmair & Schwanhäusser Anwaltssozietät

(57) **Abstract**

A method by which a user can use a function of a subscriber identity module (SIM) without directly inputting a personal identification number (PIN). The user can directly input the user's personal information corresponding to a predetermined security question for user authentication of the mobile communication terminal. The security question can be configured according to the user's preference. The user's personal information corresponding to the security question is a short answer that the user can easily remember, so that even when the user forgets the PIN or does not have a personal unblocking key (PUK), the PIN is provided immediately after the identity of the user is verified through an input of the user's personal information corresponding to the security question rather than a PUK input.

## Description

The present invention relates generally to a mobile communication terminal combined with a subscriber identity module (SIM) card, and more particularly to a method for managing personal identification information of a SIM card inserted into a mobile communication terminal.

The Global System for Mobile Communication (GSM) for European mobile communication terminals based on conventional time division multiple access (TDMA) typically uses a subscriber identity module (SIM) card.

The SIM card is a smart card that can be attached and detached from a mobile communication terminal to store various types of information for a user. The user's information stored in the SIM card includes personal identification information such as a personal identification number (PIN) for identifying the user and a personal unblocking key (PUK).

Personal identification information is stored in the memory chip of the SIM card. When the SIM card is inserted into the mobile communication terminal, the personal identification information is used to determine if the user is registered on a network. If registered, the card user can use the mobile communication terminal. Fee information is stored on the SIM to process charging the SIM card user.

Network registration for the user is confirmed according to the PIN entered. If an incorrect PIN is entered three times or more, the mobile communication terminal is blocked. To unblock the mobile communication terminal, the user must enter a PUK. If the PUK is incorrectly entered ten times or more, all calls other than an emergency call cannot be connected. The PUK, which is a unique password stored in the SIM card, is provided upon purchasing the SIM card.

The GSM-based mobile communication terminal can limit its use through the PIN in terms of security. So, if the user sets a PIN check procedure after the SIM card is mounted in the mobile communication terminal, the mobile communication terminal displays a PIN input request message when powered on. Then, the user enters the PIN, and the mobile communication terminal can be used only when the PIN is correctly entered. Similarly, when a specific function such as a fixed dialing number (FDN) mode is used, the mobile communication terminal can be used only when PIN2 is entered correctly.

When the PIN or PIN2 is incorrectly entered three times or more, the mobile communication terminal is blocked. To unblock the mobile communication terminal, the user must enter the PUK or PUK2. Because the mobile communication terminal can be no longer used when the PIN or PIN2 is incorrectly entered three times or more, a PUK or PUK2 checking function is provided in the mobile terminal.

As described above, when the PIN ,or PIN2 is incorrectly entered, the PUK or PUK2 must be entered. The user is inconvenienced because the PUK or PUK2 cannot be changed, and he or she may forget the PUK or PUK2 which may be as much as 8 decimal digits long preventing use of the terminal except for an emergency call .

A SIM card user can be identified when directly entering a correct PIN. Therefore, a need exists for a method capable of conveniently and stably performing an identification or authentication procedure if the user is verified and receives the PIN or PIN2 even when the user forgets the PIN or PIN2.

Accordingly, the present invention has been designed to solve the above and other problems occurring in the prior art.

Therefore, it is the aspect of the present invention to provide a method for managing personal identification information of a subscriber identity module (SIM) card such that a personal identification number (PIN) can be conveniently and safely input using a preset question message for user authentication even when a user forgets the PIN or does not directly enter it.

This object is solved by the subject matter of the independent claims.

Preferred embodiments are defined in the dependent claims.

The above and other aspects of the present invention can be accomplished by a method for managing personal identification information of a subscriber identity module (SIM) card inserted into a mobile communication terminal. The method includes displaying a security question for user authentication selected from the SIM card by a user; receiving an input of the user's personal information corresponding to the security question; determining if the input personal information is equal to personal information stored in the SIM card; and performing a normal operating mode if the input personal information is equal to the stored personal information.

The present invention will be more clearly understood from the following detailed description taken in conjunction with the accompanying drawings, in which:
FIG. 1 is a block diagram illustrating the internal configuration of a subscriber identity module (SIM) card in accordance with an embodiment of the present invention;
FIG. 2 is a block diagram illustrating the internal configuration of a mobile communication terminal in accordance with an embodiment of the present invention;
FIG. 3 is a flow diagram illustrating an initial registration method for the SIM card in accordance with an embodiment of the present invention;
FIG. 4 illustrates screens displaying an example of a security question and an example of a user's personal information in accordance with an embodiment of the present invention;
FIG. 5 is a flow diagram illustrating an authentication method for the SIM card when checking a personal identification number (PIN) hint is selected in accordance with a first embodiment of the present invention;
FIG. 6 is a flow diagram illustrating an authentication method for the SIM card when checking a PIN hint is not selected in FIG. 5; and
FIG. 7 is a flow diagram illustrating an authentication method for the SIM card inserted into the mobile communication terminal in accordance with a second embodiment of the present invention.

Preferred embodiments of the present invention will be described in detail herein below with reference to the accompanying drawings. In the following description, a detailed description of known functions and configurations incorporated herein will be omitted for conciseness.

The present invention provides a user with the capability of using a subscriber identity module (SIM) card without directly entering a personal identification number (PIN). In accordance with the present invention, the user can directly input the user's personal information corresponding to a predetermined security question in a screen having the security question for user authentication displayed on a display unit of the mobile communication terminal. The security question can be configured according to the user's preference. The user's personal information corresponding to the security question is preferably a short answer that the user can easily remember, rather than encrypted data including a numerical formula and an English sentence.

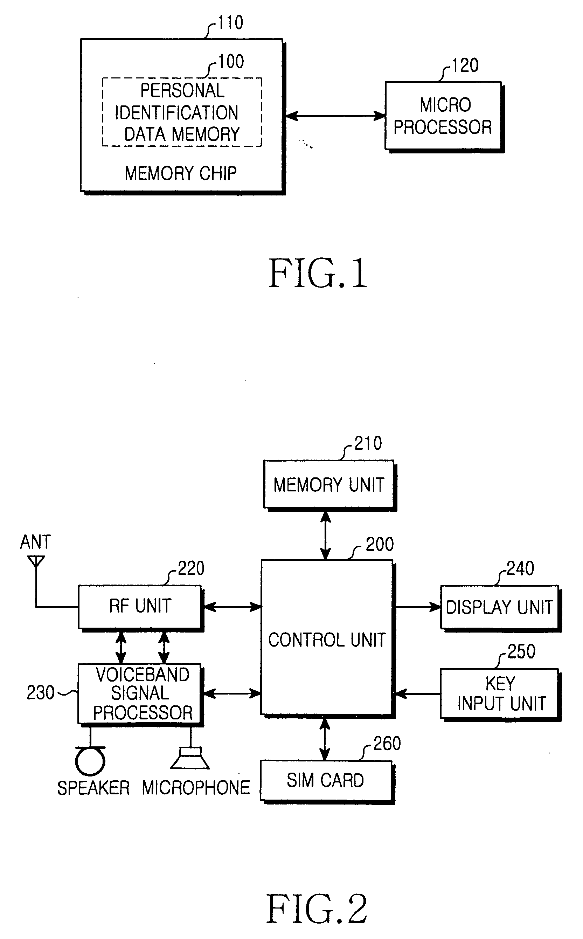

Now, the SIM card storing the security question and identification data as well as the PIN will be described. The internal configuration of the SIM card in accordance with an embodiment of the present invention will be described with reference to a block diagram illustrated in FIG. 1.

As illustrated in FIG. 1, the SIM card includes a memory chip 110 and a microprocessor 120. The memory chip 110 includes a personal identification data memory 100 for storing personal identification information such as a PIN and a personal unblocking key (PUK). More specifically, the personal identification data memory 100 stores a security question and the user's personal information necessary to identify the SIM card user. Here, the security question is a question associated with user information including content for requesting that the user input personal information. The user's personal information input according to the security question is used as user identification information, and should be easily remembered by the user.

The security question stored in the personal identification data memory 100 can be implemented in advance before the product comes to market, or can be edited according to the user's preference. When the mobile communication terminal is powered on after the SIM card of the present invention is installed in the mobile communication terminal, the security question stored in the SIM card in accordance with the present invention is transmitted to the terminal and is displayed on the terminal's screen.

The configuration and function of the mobile communication terminal for displaying the security question stored in the SIM card on the screen will now be described in accordance with the present invention. The internal configuration of the mobile communication terminal in accordance with an embodiment of the present invention will be described with reference to a block diagram illustrated in FIG. 2.

Referring to FIG. 2, a control unit 200 of the mobile communication terminal controls overall operation of the mobile communication terminal. More specifically, the control unit 200 displays a screen having a security question for user authentication selected by the user when he or she desires to access the PIN through the security question without directly entering the PIN. When the user recognizes the security question through the screen and inputs the his/her personal information in answer to the question, the control unit 200 determines if the input personal information matches the preset personal information corresponding to the security question. Accordingly, if the input personal information is matches the preset personal information, the control unit 200 performs an authentication procedure in the same way as when the PIN is directly entered, and determines that the inserted card is a normal SIM card.

Because the user may forget the PIN, the present invention notifies the user of the PIN when the user's personal information in answer to the security question is correctly input. Alternatively, when the user enters the correct answer y, an identification or authentication procedure for the SIM card is completed, so that the user can immediately use the SIM card without being notified of the PIN.

Alternatively, when the user directly enters the PIN without checking a PIN hint, the control unit 200 determines if a correct PIN is entered within a predetermined number of attempts. If the PIN is incorrectly entered the predetermined number of times, the control unit 200 notifies the user that a SIM card function is unavailable, and terminates the identification or authentication procedure for the SIM card inserted into the mobile communication terminal. As mentioned above, the control unit 200 controls an operation for reading data stored in the memory chip of the SIM card and performing the identification or authentication procedure for the SIM card.

The memory unit 210 connected to the control unit 200 is a read only memory (ROM) and a random access memory (RAM) for storing a plurality of programs and information necessary to control the mobile communication terminal, and a voice memory, etc. The memory unit 210 includes program and data memories. The program memory stores program data necessary to control operation of the mobile communication terminal, and the data memory stores data generated while a control operation or a predetermined operation at the user's request is performed.

Subsequently, a radio frequency (RF) unit 220 transmits an RF signal to and receives an RF signal from a base station through an antenna (ANT) according to a control operation of the control unit 200. A voiceband signal processor 230 is connected to a microphone (MIC) and a speaker (SPK). The voiceband signal processor 230 converts a voiceband signal received from the MIC into voiceband data to output the voiceband data to the control unit 200. The voiceband signal processor 230 converts voiceband data input from the control unit 200 into audible sound to output the audible sound through the SPK.

A display unit 240 outputs display data in response to key input data received from a key input unit 250, or displays an operating state of the mobile communication terminal and information in the form of an icon and text, according to a control operation of the control unit 200. The display unit 240 allows the user to view a function setup state and an operating state when a function is set or operated according to a control operation of the control unit 200. More specifically, the display unit 240 displays a screen indicating a PIN, a security question, an input window for inputting the user's personal information, and an identification or authentication procedure for the SIM card.

The key input unit 250 includes various keys such as number keys, character keys, etc., and provides key input data from the user to the control unit 200. That is, the key input unit 250 outputs unique key input data according to an input of each key provided therein. The key input data output from the key input unit 250 is applied to the control unit 200. The control unit 200 performs an operation corresponding to the key input data.

After the SIM card 260 is initially inserted into the mobile communication terminal, it stores data generated according to an initial registration procedure. For example, when the PIN is input, the SIM card 260 stores the input PIN. When the user selects a security question as described above, the SIM card 260 receives the user's personal information corresponding to the security question, maps the received personal information to the security question, and stores a result of the mapping. Here, the PIN is a number to be input for booting when the mobile communication terminal is powered on. The SIM card 260 stores PIN2 necessary to set up and release a fixed dialing number (FDN) mode, for example, to perform a function capable of calling another party registered in a list of addresses in addition to the PIN. For convenience of explanation, only the PIN and not the PIN2 will be described. Accordingly, the following authentication method will be described in relation to the PIN. Of course, the following authentication method can apply to the PIN2 as well.

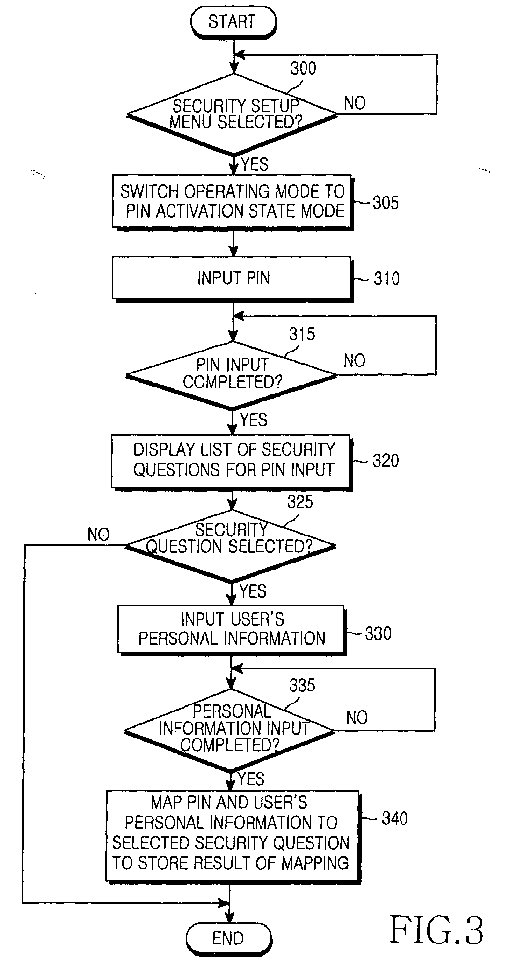

A process for storing data generated through an initial registration procedure in the SIM card in accordance with an embodiment of the present invention will now be described in detail. The initial registration method for the SIM card in accordance with an embodiment of the present invention will be described with reference to a flow diagram illustrated in FIG. 3.

First, the control unit 200 determines if a security setup menu for initially registering a PIN for the SIM card has been selected in step 300. If the security setup menu has been selected, the control unit 200 proceeds to the security setup menu. Subsequently, the control unit 200 is switched to a PIN activation state mode in step 305, and receives the PIN from the user in step 310. Subsequently, the control unit 200 determines if a PIN input has been completed in step 315. If the PIN input has been completed, a list of security questions for the PIN input is displayed on a screen in step 320.

Because the user can answer a security question with an easily remembered answer, because it is related to the user's personal information, there is no need to directly remember and input a PIN, making the authentication procedure for the SIM card much easier.

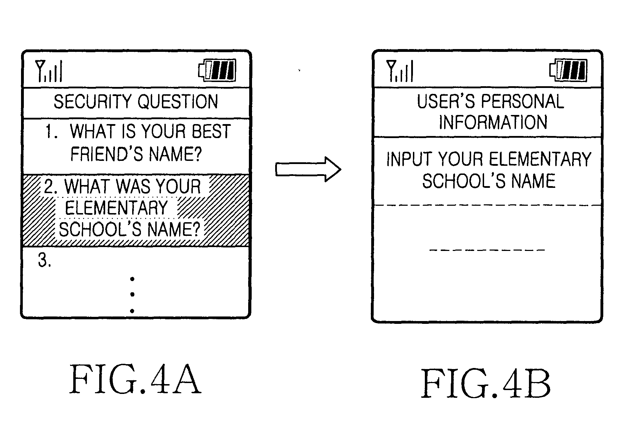

A screen for displaying the security question list for the PIN input in step 320 is illustrated in FIG. 4(A). The screen illustrated in FIG. 4(A) displays a plurality of security questions. The security questions can be stored in advance, or the user can directly edit a security question and store the edited security question.

The control unit 200 determines if the user has selected one question from the security question list displayed as illustrated in FIG. 4(A) in step 325. If the selected question is present, the control unit 200 proceeds to step 330 to receive the user's personal information corresponding to an answer to the security question from the user. A screen for inputting the answer to the security question can be displayed as illustrated in FIG. 4(B).

For example, when the user selects a security question "What was your elementary school's name?" illustrated in FIG. 4(A), an input window necessary for inputting an answer to the security question is displayed as illustrated in FIG. 4(B). Then, the user inputs the answer, that is, the user's personal information, into the input window. For example, when selecting a security question "What is your best friend's name?", the user can input, into the input window, the best friend's name. It can be seen that the user's personal information corresponding to the security question is data that only the user can easily know or remember. The user's personal information can be configured by a personal identification number such as a social security number, a word, or a combination of letters and digits.

Referring again to FIG. 3, the control unit 200 determines if the user's personal information corresponding to the security question selected by the user has been input in step 335. If the user's personal information has been input, the control unit 200 proceeds to step 340. In step 340, the control unit 200 maps, to the selected security question, the input PIN and the input personal information that can be easily remembered in place of the PIN, and stores a result of the mapping in the SIM card 260.

So far, the initial registration procedure for selecting a security question for a PIN input, and inputting the user's personal information serving as an answer to the selected security question has been described.

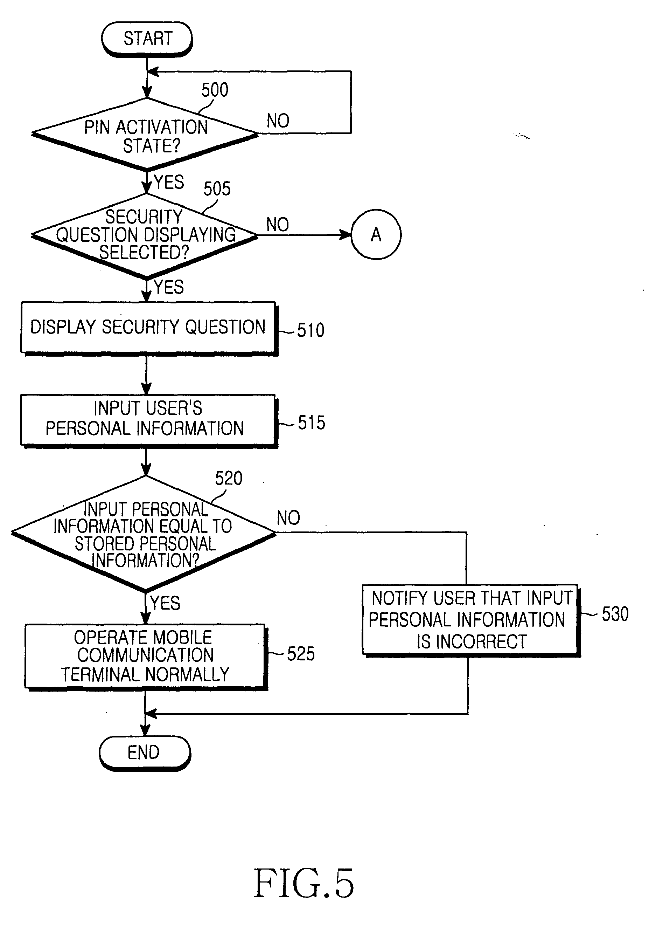

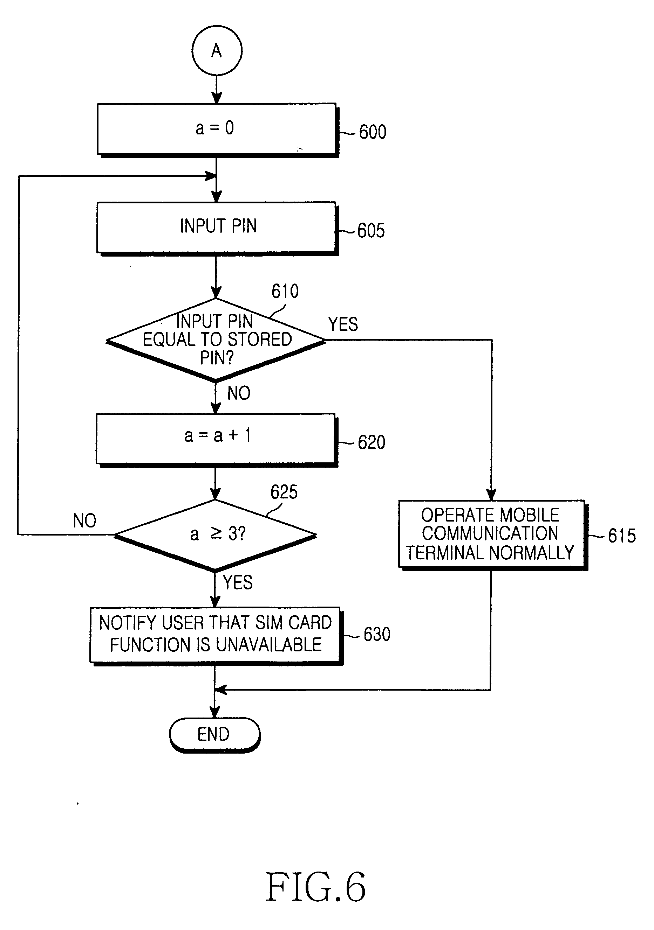

An authentication method for the SIM card inserted into the mobile communication terminal will be described with reference to FIGS. 5 and 6. FIG. 5 is a flow diagram illustrating an authentication method for the SIM card when checking a personal identification number (PIN) hint is selected in accordance with a first embodiment of the present invention, and FIG. 6 is a flow diagram illustrating an authentication method for the SIM card when checking a PIN hint is not selected in FIG. 5.

First, the authentication method for the SIM card inserted into the mobile communication terminal in accordance with a first embodiment of the present invention will be described with reference to FIG. 5. Referring to FIG. 5, the control unit 200 of the mobile communication terminal determines if the PIN is in an activation state in step 500. If the PIN is in the activation state, the control unit 200 proceeds to step 505. In step 505, the control unit 200 determines if the user has selected viewing a PIN hint. If the user has selected viewing a security question to easily perform an authentication procedure, the control unit 200 proceeds to step 510. However, if the user has not selected the security question in step 505, the control unit 200 proceeds to "A" of FIG. 6.

If the user has selected displaying the security question in step 505, the control unit 200 displays, on the screen, the security question set in the initial registration procedure by the user in step 510. Subsequently, the control unit 200 receives, from the user, personal information corresponding to the security question displayed in step 515. The input of the user's personal information prevents an error of the PIN input when the user forgets the PIN. Further, the input of the user's personal information enables the authentication procedure for the SIM card to be performed even when the user forgets or does not directly enter a PIN capable of being frequently changed.

Accordingly, when the users personal information is input from the user, the control unit 200 proceeds to step 520 to determine if the input personal information is correct by determining whether it matches pre-stored personal information corresponding to the security question. If the input personal information matches the pre-stored personal information, the control unit 200 proceeds to step 525 to normally operate the mobile communication terminal. However, if the input personal information is different from the pre-stored personal information in step 520, the control unit 200 proceeds to step 530 to notify the user that the input personal information is incorrect.

Alternatively, after notifying the user that the answer to the security question is incorrect, the control unit 200 can notify the user that an authentication procedure for the SIM has card failed and thus the SIM card is unavailable. When the user's personal information corresponding to the security question is input correctly within a predetermined number of times, the mobile communication terminal performs normally.

When the user's personal information is incorrectly input, the number of re-inputs of the user's personal information can be set to a predetermined number of times. The limit of the number of inputs of the user's personal information can be changed.

When the user has not selected displaying the security question in step 505, the control unit 200 proceeds to "A" of FIG. 6, and then initializes an arbitrary parameter value "a" to 0 in step 600. Here, the parameter value "a" is a parameter for counting the number of PIN inputs. The control unit 200 receives a PIN input from the user in step 605, and determines if the input PIN matches a pre-stored PIN in step 610. If the input PIN matches the pre-stored PIN, the control unit 200 proceeds to step 615 to control the mobile communication terminal to operate normally.

However, if the input PIN is different from the pre-stored PIN in step 610, the control unit 200 proceeds to step 620 to increment the parameter value "a" by one. Subsequently, the control unit 200 proceeds to step 625 to determine if the parameter value "a" is equal to or larger than 3. If the parameter value is equal to or larger than 3, the control unit 200 proceeds to step 630. However, if the parameter value is smaller than 3, the control unit 200 returns to step 605. That is, if the number of PIN inputs is equal to or larger than 3, the control unit 200 proceeds to step 630. Otherwise, the control unit 200 returns to step 605 to receive a PIN re-input by the user. Accordingly, when the number of PIN inputs is equal to or larger than 3, the control unit 200 proceeds to step 630 to notify the user that the authentication procedure for the SIM card has failed and the SIM card is unavailable.

As described above, the authentication procedure for the SIM card when the user directly enters the PIN is the same as the authentication procedure when the user inputs the user's personal information corresponding to the security question without directly entering the PIN equal to that stored in the SIM card.

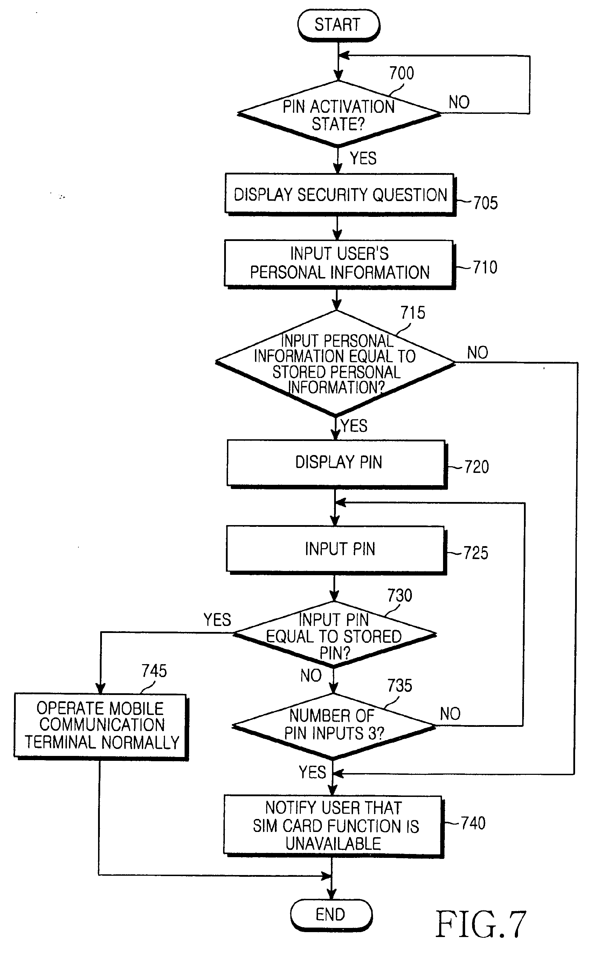

An authentication procedure in which the PIN is displayed on the screen and the user is notified of the PIN to enter it when the user's personal information corresponding to the security question is input will be described. An authentication method for the SIM card inserted into the mobile communication terminal in accordance with a second embodiment of the present invention will be described with reference to a flow diagram illustrated in FIG. 7.

First, when the mobile communication terminal is powered on after the SIM card is inserted into the mobile communication terminal, the control unit 200 determines if the mobile communication terminal is in a PiN activation state in step 700. If the mobile communication terminal is in the PIN activation state, the control unit 200 proceeds to step 705. In this case, when the mobile communication terminal is powered on, data stored in the memory chip of the SIM card is delivered to the control unit 200. Accordingly, the control unit 200 displays a security question of the delivered data on the screen of the display unit 240 in step 705.

The security question stored in the SIM card is displayed immediately after the terminal is powered on, according to the user's setup operation, or is displayed on the screen according to the users selection. That is, the first embodiment of the present invention provides a menu such that the user can select displaying the security question. The second embodiment of the present invention can automatically display the security question on the screen immediately after the terminal is powered on, without displaying a special menu.

When the security question is displayed, the control unit 200 proceeds to step 710 to receive the user's personal information input as an answer to the security question from the user. Then, the control unit 200 proceeds to step 715 to determine if the input personal information matches the user's personal information pre-stored in the SIM card.

If the input personal information is different from the pre-stored personal information, the control unit 200 proceeds to step 740 to notify the user that the SIM card is unavailable. However, if the input personal information matches the pre-stored personal information, the control unit 200 proceeds to step 720 to display the PIN set in the SIM card to notify the user of the PIN. Subsequently, when the PIN input by the user is received in step 725, the control unit 200 proceeds to step 730 to determine if the input PIN matches the PIN stored in the SIM card. If the input PIN matches the stored PIN, the control unit 200 proceeds to step 745 to operate the mobile communication terminal normally, that is, to enable the SIM card function. However, if the input PIN is different from the stored PIN, the control unit 200 proceeds to step 735.

If the number of PIN inputs is smaller than 3 in step 735, the control unit 200 returns to step 725 to receive a re-input PIN. However, when the number of PIN inputs is equal to or larger than 3, that is, when the PIN is incorrectly input 3 times or more, the control unit 200 proceeds to step 740 to notify the user that the SIM card function is unavailable.

The second embodiment of the present invention allows the user to input the user's personal information when the user selects checking a PIN hint such that a security question is displayed to verify the identity of the user who has forgotten the PIN. The input personal information is compared with personal information stored in the SIM card. When the input personal information matches the personal information stored in the SIM card, the PIN stored in the SIM card is displayed on a screen, and the user is notified of the PIN to enter it.

The present invention can provide a method that can conveniently and stably perform an identification or authentication procedure for a SIM card through a direct input of an encrypted PIN or a PIN hint according to a user's need.

In accordance with the present invention, the user does not need to enter a long digit code of a PIN or PUK. Accordingly, there is an advantage in that an identification or authentication procedure can be simply performed using an answer to a question that can be easily remembered. Even when the user forgets the PIN or does not have a PUK, the PIN is provided immediately after the identity of the user is verified through an input of the user's personal information corresponding to the security question rather than a PUK input, so that authentication procedure can be conveniently and stably performed.

Although preferred embodiments of the present invention have been disclosed for illustrative purposes, those skilled in the art will appreciate that various modifications, additions and substitutions are possible, without departing from the scope of the present invention. For example, a PIN has been used in the embodiments of the present invention. Of course, other personal identification numbers such as PIN2, PUK, PUK2, etc. can be used. Therefore, the present invention is not limited to the above-described embodiments, but is defined by the following claims.

## Claims

1. A method for managing personal identification information of a subscriber identity module, SIM, card in a mobile communication terminal, comprising:
displaying a security question for user authentication selected from the SIM card by a user;
receiving an input of the user's personal information corresponding to the security question;
determining if the input personal information matches personal information stored in the SIM card; and
performing a normal operating mode if the input personal information matches the stored personal information.

2. The method according to claim 1, further comprising:
selecting, by the user, the security question for user authentication;
receiving an input of the user's personal information serving as an answer to the security question when the security question has been selected; and
mapping the input personal information to the security question and storing a result of the mapping.

3. The method according to claim 1 or 2, further comprising:
receiving the user's personal information input from the user when the security question requiring the input of the user's personal information is displayed;
comparing the input personal information with the personal information stored in the SIM card;
displaying a personal identification number, PIN, stored in the SIM card when the input personal information matches the stored personal information; and
performing the normal operating mode when an input PIN is equal to the PIN stored in the SIM card.

4. The method according to claim 3, further comprising:
receiving a re-input PIN within a predetermined number of times when the input PIN is different from the PIN stored in the SIM card.

5. The method according to claim 3 or 4, further comprising:
notifying the user that a function of the SIM card is unavailable when the input PIN is different from the PIN stored in the SIM card.

6. The method according to one of claims 1 to 5, wherein the security question stored in the SIM card and the user's personal information corresponding thereto can be edited and stored by the user.

7. The method according to claim 6, wherein the security question and the user's personal information corresponding thereto are stored along with the PIN when an initial registration procedure for the SIM card is performed.

8. The method according to one of claims 1 to 7, wherein the security question is automatically displayed on a screen when the mobile communication terminal is powered on.

9. The method according to one of claims 1 to 8, wherein the security question is displayed according to the user's selection of displaying the security question when the mobile communication terminal is powered on.
